(19) Europäisches Patentamt
European Patent Office
Office européen des brevets

(11) **EP 2 048 530 A1**

(12) **EUROPEAN PATENT APPLICATION**
published in accordance with Art. 153(4) EPC

(43) Date of publication:
**15.04.2009 Bulletin 2009/16**

(51) Int Cl.:
*G02B 15/167* (2006.01)　　*G02B 13/18* (2006.01)

(21) Application number: **07739101.9**

(22) Date of filing: **20.03.2007**

(86) International application number:
**PCT/JP2007/055658**

(87) International publication number:
**WO 2007/122944 (01.11.2007 Gazette 2007/44)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **20.04.2006　JP 2006116636**

(71) Applicant: **Sharp Kabushiki Kaisha**
**Osaka-shi, Osaka 545-8522 (JP)**

(72) Inventor: **UEDA, Minoru**
**Nara-ken (JP)**

(74) Representative: **Müller - Hoffmann & Partner**
**Patentanwälte**
**Innere Wiener Strasse 17**
**81667 München (DE)**

(54) **ZOOM LENS, DIGITAL CAMERA AND MOBILE INFORMATION TERMINAL DEVICE**

(57)　There are comprised a first group lens G1 that has a negative refractive power at a fixed distance from an image plane, a second group lens G2 that has a positive refractive power, a third group lens G3 that has a positive refractive power, and a fourth group lens G4 that has a negative refractive power at a fixed distance from the image plane. The first group lens G1, the second group lens G2, the third group lens G3 and the fourth group lens G4 are arranged in order from the object side toward the image plane. Zooming is performed by moving the second group lens G2 and the third group lens G3 in the optical axis direction by lens-moving mechanisms 1, 2 so that a spacing between the first group lens G1 and the second group lens G2 at the telephoto end state is made smaller than a spacing between the first group lens G1 and the second group lens G2 at the wide angle end state, and a spacing between the third group lens G3 and the fourth group lens G4 increases as the zoom lens shifts from the wide angle end state to the telephoto end state.

Fig.1

EP 2 048 530 A1

**Description**

TECHNICAL FIELD

The present invention relates to compact-size zoom lenses, digital cameras and portable information equipment and, in particular, to a zoom lens that has excellent portability and reduced total length of the lens built in a portable information terminal or a portable telephone and a digital camera and portable information equipment employing it.

BACKGROUND ART

In recent years, a portable information terminal, a portable telephone and the like called PDA (Personal Digital Assistant) have been popularized, and many of them have imaging devices such as a digital camera mounted thereon. These imaging devices are reduced in size by employing a compact-size CCD (Charge Coupled Device) or a CMOS (Complementary Metal-Oxide Semiconductor) sensor. Moreover, in accordance with the popularization of these devices, imaging devices are demanded to be further reduced in size and have high resolution and high performance, and there is an ongoing trend of mounting a zoom lens on a thin housing like that of a portable telephone.

With regard to the zoom lens to be mounted on a portable terminal such as a portable telephone, a type such that the lens located on the extreme object side called the conventional collapsible type is unfavorable from the viewpoint of dustproof and impact resistance, whereas it is advantageous for the portable equipment since only the inner lens of the zoom lens is driven and the construction in which the lens located on the extreme object side and the lens located on the extreme image plane side are fixed has excellent robustness and can be easily subjected to dustproof measures.

As such a zoom lens, a negative-positive-positive-positive four-component zoom lens that is constructed of a first group lens having a negative refractive power, and a second group lens, a third group lens and a fourth group lens each having a positive refractive power, the group lenses being arranged in order from the object side and performs a magnification change by driving only the second group lens and the third group lens is disclosed in, for example, JP H11-249016 A. With regard to the zoom lens, a compact zoom lens with a small number of lenses is achieved by providing an aperture stop between the first group lens and the second group lens and constructing the fourth group lens of cemented lens.

However, in the zoom lens of the construction as described in JP H11-249016 A, the fourth group lens has the positive refractive power, and therefore, the back focus tends to become long. Moreover, since the fourth group lens, which has a large outside diameter and a small radius of curvature, is constructed of two lenses, the lens thickness cannot be reduced, and it is difficult to shorten the optical total length.

Moreover, as a lens constructed of a first group lens having a negative refractive power, a second group lens and a third group lens each having a positive refractive power, and a fourth group lens having a negative refractive power, the group lenses being arranged in order from the object side, the zoom lenses described in, for example, JP 2003-43358 A and JP 2004-318106 A can be enumerated. In the zoom lens, the second group lens having an aperture is moved toward the object side during a magnification change from a wide angle end state to the telephoto end state.

However, in the above construction, the first group lens must be moved besides the third group lens in order to suppress the movement of the focal position during the magnification change, and it is impossible to always fix both of the lens located on the extreme object side and the lens located on the extreme image plane side.

The present invention is made in view of the above problems and has an object to provide a compact high-performance zoom lens of a large zoom ratio and a simple construction with dust-proofness and robustness.

DISCLOSURE OF INVENTION

In order to solve the problems, a zoom lens according to the present invention comprises:

a first group lens that has a negative refractive power and is placed at a fixed distance from an image plane;
a second group lens that has a positive refractive power and moves during zooming;
a third group lens that has a positive refractive power and moves during zooming; and
a fourth group lens which has a negative refractive power and is placed at a fixed distance from the image plane, wherein
the first group lens, the second group lens, the third group lens and the fourth group lens are arranged in order from an object side toward the image plane, and
the zoom lens comprises a lens-moving mechanism for moving the second group lens and the third group lens in an optical axis direction so that a spacing between the first group lens and the second group lens at a telephoto end state is made smaller than a spacing between the first group lens and the second group lens at a wide angle end state, and a spacing between the third group lens and the fourth group lens increases as the zoom lens shifts from the wide angle end state to the telephoto end state.

According to the above construction, the second group lens and the third group lens are moved in the optical axis direction by the lens-moving mechanism so that the spacing between the first group lens and the second group lens at the telephoto end state is made smaller than the spacing between the first group lens and the second group lens at the wide angle end state, and the spacing between the third group lens and the fourth group lens increases as the zoom lens shifts from the wide angle end state to the telephoto end state. With this arrangement, the movement of the focal position during zooming can be suppressed moving neither the first group lens nor the fourth group lens. By thus fixing the first group lens and the fourth group lens, the airtightness of the zoom lens can easily be improved, providing excellent dust-proofness and allowing sufficient robustness to be obtained. Therefore, a compact high-performance zoom lens of a large zoom ratio can be provided with a simple construction having dust-proofness and robustness. In this case, it is acceptable to fix the first group lens and the fourth group lens to a housing or the like that holds the lens group of the zoom lens or to a casing or the like of an apparatus that receives the zoom lens.

In one embodiment of the zoom lens, the third group lens has an aperture stop and a plurality of lenses.

According to the above embodiment, by constituting the third group lens that has the aperture stop of, for example, the plurality of lenses made of different materials, an increase in the total length of the zoom lens can be suppressed to a minimum while correcting chroma aberration.

In one embodiment of the zoom lens, the plurality of lenses of the third group lens are at least one lens that has a positive refractive power and at least one lens that has a negative refractive power.

According to the above embodiment, by constituting the third group lens that has the aperture stop of, for example, the plurality of lenses that have a positive refractive power and a negative refractive power and are made of different materials, an increase in the total length of the zoom lens can be suppressed to a minimum while correcting chroma aberration.

In one embodiment of the zoom lens,

the plurality of lenses of the third group lens are a lens that has a positive refractive power and a lens that has a negative refractive power, and

the aperture stop, the lens that has the positive refractive power and the lens that has the negative refractive power are arranged in order from the object side toward the image plane side.

According to the above embodiment, by arranging the aperture stop, the lens that has the positive refractive power and the lens that has the negative refractive power, in order from the object side toward the image plane side in the third group lens, the effective diameter of the lenses of the third group lens can be made almost the same as the effective diameter of the aperture stop. By reducing the effective diameter of the aperture stop s, the effective diameter of the lenses of the third group lens can be reduced.

One embodiment of the zoom lens further comprises a mechanical shutter that is placed in between the third group lens and the fourth group lens and in the vicinity of the third group lens.

According to the above embodiment, by placing the mechanical shutter in between the third group lens and the fourth group lens and in the vicinity of the third group lens, the aperture diameter of the mechanical shutter can be reduced since the mechanical shutter is located near the aperture stop, and this is advantageous for compactification. Moreover, since the shutter can be released in the position where luminous fluxes gather in comparison with the case where the shutter is provided in the vicinity of the image plane, a reduction in the peripheral brightness due to a shutter speed can be suppressed.

In one embodiment of the zoom lens,

a surface located on the extreme object side of the fourth group lens is an aspheric surface, and

the refractive power on the optical axis of the fourth group lens is negative, and the refractive power of a peripheral portion within an effective range of the fourth group lens is positive.

According to the above embodiment, by forming the surface located on the extreme object side of the fourth group lens into an aspheric surface such that the refractive power on the optical axis is negative and the refractive power of the peripheral portion within the effective range of the fourth group lens is positive, an incident angle to the image plane of off-axis light beams can be suppressed from excessively increasing with the back focus shortened. In this case, the peripheral portion within the effective range of the fourth group lens is a radially outside region within the effective range about the optical axis of the fourth group lens.

In one embodiment of the zoom lens, the first group lens is comprised of only one lens.

According to the above embodiment, by constituting the first group lens of a large effective diameter of one lens, an increase in the total length of the zoom lens due to the lens thickness can be suppressed to a minimum.

In one embodiment of the zoom lens, the one lens of the first group lens is a meniscus lens that has a convex surface on the object side.

According to the above embodiment, by constituting the first group lens of a large effective diameter of one meniscus lens that has a convex surface on one object side, an increase in the total length of the zoom lens due to the lens thickness can be suppressed to a minimum, and the numerical aperture is improved allowing the peripheral brightness ratio to be kept high even at the wide angle end state.

In one embodiment of the zoom lens, a concave surface located on the image plane side of the meniscus lens is an aspheric surface.

According to the above embodiment, by forming at least the concave surface on the image plane side of the meniscus lens into an aspheric surface, aberration correction of off-axis light beams can be made satisfactory.

In one embodiment of the zoom lens, a surface shape of the concave surface located on the image plane side of the meniscus lens is formed into an aspheric surface with resin.

According to the above embodiment, by forming the concave surface on the image plane side of the meniscus lens of the first group lens into an aspheric surface with resin, aberration correction of off-axis light beams is made satisfactory allowing the optical characteristics to be improved, and the first group lens can be constructed of one lens, which is advantageous for compactification.

A digital camera according to the present invention comprises:

the above zoom lens; and
an electronic imaging device that receives an image formed by the zoom lens.

According to the above construction, a compact high-performance digital camera of a large zoom ratio can be provided by employing the above zoom lens.

Portable information equipment according to the present invention comprises:

the above zoom lens; and
an electronic imaging device that receives an image formed by the zoom lens.

According to the above construction, portable information equipment having a compact high-performance imaging function of a large zoom ratio can be provided by employing the above zoom lens.

As apparent from the above, according to the zoom lens of the invention, by fixing the first group lens that is the lens located on the extreme object side and the fourth group lens that is the lens located on the extreme image plane side, a compact high-performance zoom lens of a large zoom lens, which has excellent robustness and excellent dust-proofness, can be provided with a simple construction with the increase in the total length suppressed to a minimum.

Moreover, according to the digital camera of the invention, a compact high-performance digital camera of a large zoom ratio can be provided by employing the above zoom lens.

Moreover, according to the portable information equipment of the invention, portable information equipment having a compact high-performance imaging function of a large zoom ratio can be provided by employing the above zoom lens.

BRIEF DESCRIPTION OF DRAWINGS

Fig. 1 is a sectional view showing the construction of a zoom lens according to a first embodiment of invention;
Fig. 2 is a sectional view showing the construction of a zoom lens according to a second embodiment of invention;
Fig. 3 is a sectional view showing the construction of a zoom lens according to a third embodiment of invention;
Fig. 4 is a sectional view showing the construction of a zoom lens according to a fourth embodiment of invention;
Fig. 5 is a chart of aberration at the wide angle end state of the zoom lens of the first embodiment;
Fig. 6 is a chart of aberration at the intermediate focal distance state of the zoom lens;
Fig. 7 is a chart of aberration at the telephoto end state of the zoom lens;
Fig. 8 is a chart of aberration at the wide angle end state of the zoom lens of the second embodiment;
Fig. 9 is a chart of aberration at the intermediate focal distance state of the zoom lens;
Fig. 10 is a chart of aberration at the telephoto end state of the zoom lens;
Fig. 11 is a chart of aberration at the wide angle end state of the zoom lens of the third embodiment;
Fig. 12 is a chart of aberration at the intermediate focal distance state of the zoom lens;
Fig. 13 is a chart of aberration at the telephoto end state of the zoom lens;
Fig. 14 is a chart of aberration at the wide angle end state of the zoom lens of the fourth embodiment;
Fig. 15 is a chart of aberration at the intermediate focal distance state of the zoom lens;
Fig. 16 is a chart of aberration at the telephoto end state of the zoom lens;

BEST MODE FOR CARRYING OUT THE INVENTION

The zoom lens, the digital camera and the portable information equipment of the invention will now be described in detail below by the embodiments shown in the drawings. It is noted that the invention is not limited to the following embodiments.

(First Embodiment)

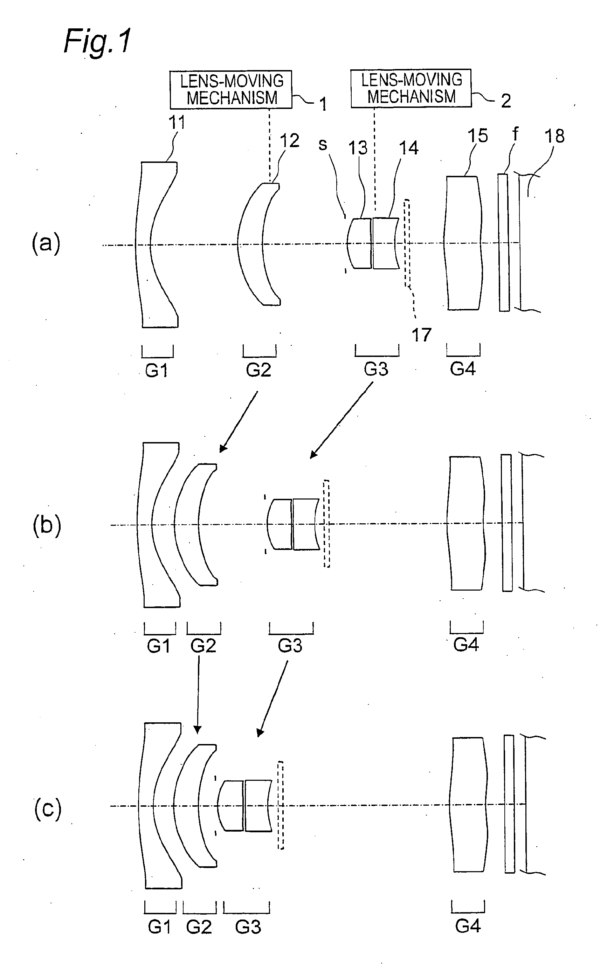

Fig. 1 is a sectional view showing the construction of the zoom lens of the first embodiment of the invention, in which the sectional views of Fig. 1(a), Fig. 1(b) and Fig. 1(c) show zoom positions at the wide angle end state, the intermediate focal distance state and the telephoto end state, respectively. Moreover, the left-hand side of Fig. 1 is the object side, and the right-hand side is the image plane side. The arrows in the figures show the movements of lenses during zooming.

As shown in Fig. 1, the zoom lens of the first embodiment is a zoom lens, which is constructed of a first group lens G1 that has a negative refractive power, a second group lens G2 that has a positive refractive power, a third group lens G3 that has a positive refractive power and a fourth group lens G4 that has a negative refractive power, and in which the first group lens G1, the second group lens G2, the third group lens G3 and the fourth group lens G4 are arranged in order from the object side toward the image plane. In the zoom lens, the first group lens G1 and the fourth group lens G4 are fixed during a magnification change and focusing (focus adjusting). Moreover, during the magnification change, the second group lens G2 and the third group lens G3 are moved along the optical axis by lens-moving mechanisms 1, 2 so that a spacing between the first group lens G1 and the second group lens G2 at the telephoto end state is made smaller than a spacing between the first group lens G1 and the second group lens G2 at the wide angle end state, and a spacing between the third group lens G3 and the fourth group lens G4 increases as the zoom lens shifts from the wide angle end state to the telephoto end state.

The first group lens G1 is a meniscus lens 11 of which the convex surface faces the object side, and the second group lens G2 is a lens 12 which has a positive refractive power and of which the convex surface faces the object side and the concave surface faces the image plane side. Moreover, the third group lens G3 has an aperture stop s, a lens 13 that has a positive refractive power on the object side and a lens 14 that has a negative refractive power on the image plane side. The aperture stop s, the lens 13 and the lens 14 are arranged in order from the object side toward the image plane side. Moreover, the fourth group lens G4 is a lens 15, of which the surface on the extreme object side is an aspheric surface, the refractive power on the optical axis is negative, and the refractive power of the peripheral portion within the effective range of the fourth group lens G4 is positive. Moreover, a glass block f of a filter or the like is placed on the image plane side of the fourth group lens G4.

Moreover, the aperture stop s and the lenses 13, 14 of the third group lens G3 are integrally moved in the optical axis direction by the lens-moving mechanism 2 during zooming.

In the construction of the zoom lens, by fixing the first group lens G1 and the fourth group lens G4, the airtightness of the zoom lens can easily be improved, providing excellent dust-proofness and allowing sufficient robustness to be obtained. Moreover, generally in a minus lead type zoom lens in which a lens that has a negative refractive power is placed on the object side, the effective diameter of the first group lens is large. Therefore, it is effective that the first group lens is not driven in terms of the mechanism construction.

In general, in order to correct the chroma aberration of the lenses, it is effective to combine a plurality of lenses made of different materials, the lenses being a lens that has a positive refractive power and a lens that has a negative refractive power. However, increasing the number of lenses leads to an increase in the total length of the zoom lens and difficulties in compactification. Therefore, in order to correct the chroma aberration, it is most effective that the lens group is constructed of a plurality of lenses so that the increase in the total length of the zoom lens due to the increase in the number of lenses can be suppressed to a minimum.

Moreover, the lens needs to have a thickness of about 0.5 mm to 1.0 mm even in a portion of the smallest thickness in view of the problem of strength and so on. A center thickness needs to be greater than the thickness in the case of a biconcave lens, and an outermost peripheral portion needs to be greater than the thickness in the case of a biconvex lens. Therefore, the lens thickness cannot help being increased as the effective diameter is increased even in the case of a lens of an equal radius of curvature. Therefore, an increase in the total length of the zoom lens can be suppressed to a minimum with the chroma aberration corrected by employing a plurality of lenses of different glass materials for the lens group of a small effective diameter.

Therefore, by constituting the third group lens G3 that has the aperture stop s of the lens 13 that has the positive refractive power and the lens 14 that has the negative refractive power, which are constructed of different materials, the increase in the total length of the zoom lens can be suppressed to a minimum with the chroma aberration corrected. Although one lens that has the positive refractive power and one lens that has the negative refractive power are employed, it is acceptable to constitute the third group lens G3 of two or more of either one or to constitute the third group lens G3 of two or more of both of them.

Particularly, in the zoom lens of the present construction, mainly the focal distance changes due to the movement of the third group lens, and its amount of movement during the magnification change is largest. Therefore, if the third group lens is constructed of a single lens, it is difficult to suppress the chroma aberration due to the movement during the magnification change. Therefore, by constituting the third group lens of the largest amount of movement of a plurality of lenses, the chroma aberration can be satisfactorily suppressed.

Moreover, by arranging the aperture stop s, the lens 13 that has the positive refractive power and the lens 14 that has the negative refractive power in order from the object side toward the image plane side in the third group lens G3, the effective diameters of the lens 13 that has the positive refractive power and the lens 14 that has the negative refractive power can be made almost the same as the effective diameter of the aperture stop s. By reducing the effective diameter of the aperture stop s, the effective diameter of the lenses of the third group lens G3 can be reduced.

If the aperture stop s, the lens that has the negative refractive power and the lens that has the positive refractive power are arranged in order from the object side, the effective diameter of the lens that has the positive refractive power disadvantageously increases.

Moreover, in the zoom lens of the above construction, the spacing between the third group lens G3 and the fourth group lens G4 is not smaller than 2 mm, which is comparatively large at the shortest, and it is possible to provide a mechanical shutter 17 in the space. In this case, if the shutter is arranged so as to move integrally with the third group lens G3 in the vicinity of the third group lens G3 between the third group lens G3 and the fourth group lens G4, the aperture diameter of the shutter can be reduced since the shutter is located near the aperture stop s, and this is advantageous for compactification. Moreover, since the shutter can be released in a position where luminous fluxes gather in comparison with the case where the shutter is provided in the vicinity of the image plane, a reduction in the peripheral brightness due to shutter speed can be suppressed.

Moreover, by forming the surface located on the extreme object side of the fourth group lens G4 into an aspheric surface such that the refractive power on the optical axis is negative and the refractive power of the peripheral portion within the effective range of the fourth group lens G4 is positive, an incident angle to the image plane of off-axis light beams can be suppressed from excessively increasing with the back focus shortened.

Moreover, by constituting the first group lens G1 of a large effective diameter of one lens, an increase in the total length of the zoom lens due to the lens thickness can be suppressed to a minimum. In this case, by providing the first group lens by a meniscus lens 11 that has a convex surface on the object side, the numerical aperture can be improved, and the peripheral brightness ratio can be kept high even at the wide angle end state. Moreover, by forming the concave surface on the image plane side of the meniscus lens 11 into an aspheric surface, aberration correction of off-axis light beams can be made satisfactory.

Moreover, the radius of curvature of the lens can be increased by using a low-dispersion glass material of a high refractive index for the first group lens G1, and this is therefore advantageous for aberration correction. In addition, the lens thickness is reduced, and this is therefore advantageous also for compactification.

Next, numerical examples of the zoom lens of the first embodiment are shown in Table 1 through Table 3. In the numerical examples shown in the surface data of Table 1, the radius of curvature [mm] of each surface, axial intersurface spacing (lens thickness or air spacing) [mm], refractive index to d line, Abbe number to d line are shown in order from the object side. Moreover, the aspheric surfaces in Table 1 and Table 2 have aspheric surface shapes expressed by the following aspheric surface equation.

$$Z = \frac{\dfrac{Y^2}{R}}{1+\sqrt{1-(1+K)\dfrac{Y^2}{R^2}}} + AY^4 + BY^6 + CY^8 + DY^{10} \qquad \dots Eq.(1)$$

It is noted that K is a conic constant, A, B, C and D are aspheric surface coefficients, Y is a height from the optical axis, R is a radius of curvature at an aspheric surface vertex, Z is a distance in a direction perpendicular to the tangential plane of the aspheric surface vertex on the aspheric surface at the height Y from the optical axis.

Table 1

| Surface | | Radius of curvature | Axial intersurface spacing | Refractive index | Abbe number |
|---|---|---|---|---|---|
| 1 | Aspheric surface | 14.959 | 0.800 | 1.806 | 40.7 |
| 2 | Aspheric surface | 3.967 | Variable | | |
| 3 | Aspheric surface | 4.255 | 1.285 | 1.821 | 24.1 |
| 4 | Aspheric surface | 6.081 | Variable | | |
| 5 | Stop | ∞ | 0.100 | | |
| 6 | Aspheric surface | 2.657 | 1.264 | 1.589 | 61.3 |
| 7 | Aspheric surface | -11.385 | 0.100 | | |
| 8 | | 65.434 | 1.149 | 1.847 | 23.8 |
| 9 | | 3.791 | Variable | | |
| 10 | Aspheric surface | 6.973 | 1.856 | 1.821 | 24.1 |
| 11 | Aspheric surface | 6.034 | 0.935 | | |
| 12 | | ∞ | 0.500 | 1.517 | 64.2 |
| 13 | | ∞ | | | |

Next, aspheric surface data of the first embodiment are shown in Table 2. It is noted that an index base 10 is represented by a symbol E and a multiplication sign * is omitted according to the expression in the floating point form of Table 2. For example, -0.12345 * 10 (-15th power) is expressed as -0.12345E-15.

Table 2

| Surface | R | k | A | B | C | D |
|---|---|---|---|---|---|---|
| 1 | 14.959 | 0.0000 | -4.0208E-04 | 4.2176E-06 | -1.8903E-06 | 14.959 |
| 2 | 3.967 | -0.7478 | -8.6996E-04 | 5.4019E-05 | -1.8182E-05 | 3.967 |
| 3 | 4.255 | -0.4313 | -1.2430E-03 | -1.5588E-04 | 2.2147E-05 | 4.255 |
| 4 | 6.081 | 1.0000 | -1.8090E-03 | -1.4620E-04 | 4.2191E-05 | 6.081 |
| 6 | 2.657 | -0.3086 | 5.0243E-03 | 3.4401E-03 | -5.2995E-04 | 2.657 |
| 7 | -11.385 | 0.6588 | 1.5257E-02 | 8.8992E-03 | -4.4080E-03 | -11.385 |
| 10 | 6.973 | -0.8264 | -1.5051E-02 | 2.0784E-03 | -1.4776E-04 | 6.973 |
| 11 | 6.034 | -0.1677 | -2.9173E-02 | 3.6843E-03 | -2.2502E-04 | 6.034 |

Next, zoom data of the first embodiment are shown in Table 3. In Table 3, "intersurface spacing 2" means a distance [mm] between the second surface and the third surface, "intersurface spacing 4" means a distance [mm] between the fourth surface and the fifth surface, and "intersurface spacing 9" means a distance [mm] between the ninth surface and the tenth surface.

Table 3

| | Wide angle end state | Intermediate focal distance state | Telephoto end state |
|---|---|---|---|
| Angle of view | 36.0° | 20.0° | 14.3° |
| Focal distance | 4.9 | 9.8 | 14.0 |
| Intersurface spacing 2 | 4.509 | 1.193 | 1.077 |
| Intersurface spacing 4 | 4.407 | 3.337 | 0.850 |
| Intersurface spacing 9 | 2.556 | 6.943 | 9.545 |

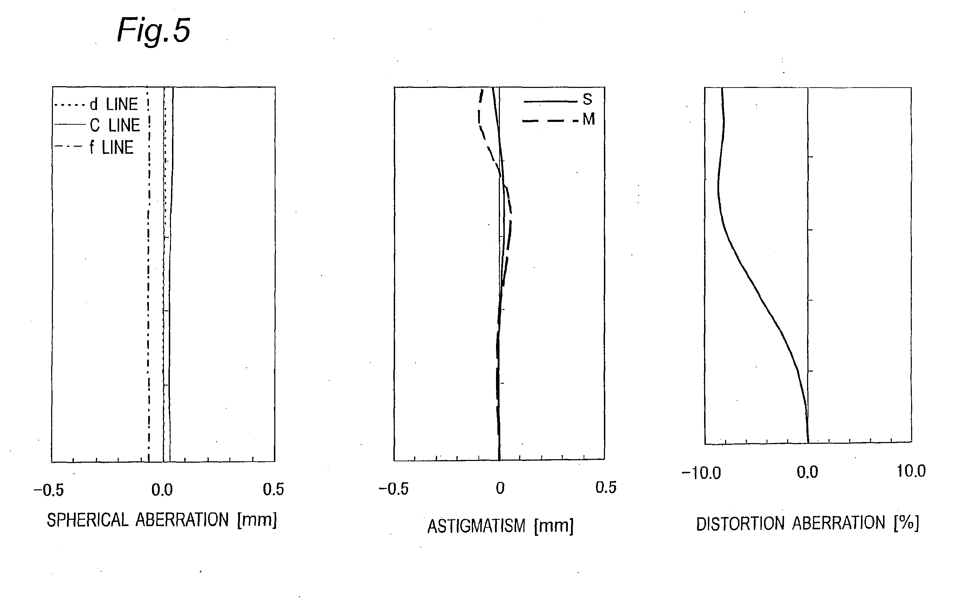

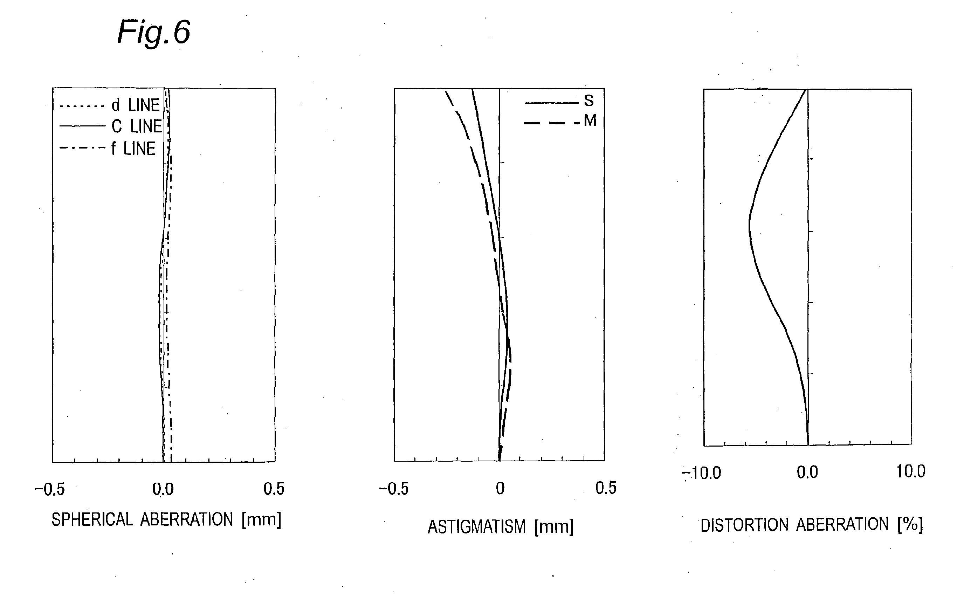

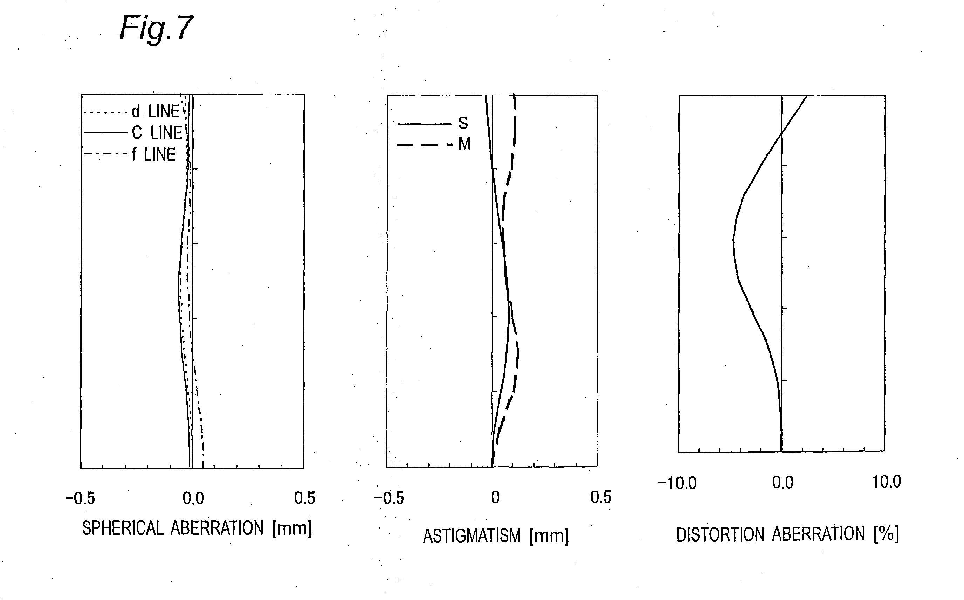

Fig. 5 through Fig. 7 are charts of infinite aberration corresponding to the first embodiment. Fig. 5, Fig. 6 and Fig. 7 show charts of infinite aberration at the wide angle end state, the intermediate focal distance state and the telephoto end state, respectively, and spherical aberration, astigmatism and distortion aberration are shown in order from the left-hand side.

In the spherical aberration charts shown in Fig. 5 through Fig. 7, the dotted line indicates d line (wavelength: 587.6 nm), the solid line indicates C line (wavelength: 656.3 nm), and the one-dot chain line indicates f line (wavelength: 486.1 nm). Moreover, in the astigmatism charts shown in Fig. 5 through Fig. 7, the solid line S indicates the sagittal image plane, and the dashed line M indicates the tangential image plane.

In the zoom lens of the first embodiment, as shown in Fig. 5 through Fig. 7, satisfactory optical characteristics were obtained at the wide angle end state, the intermediate focal distance state and the telephoto end state with regard to the characteristics of spherical aberration, astigmatism and distortion aberration.

Therefore, according to the zoom lens of the first embodiment, a compact high-performance zoom lens of a large zoom ratio can be made up of a simple construction with dust-proofness and robustness, and a small-size thin type zoom lens suitable for portable information equipment such as a digital camera, a portable telephone, PDA or the like can be provided.

(Second Embodiment)

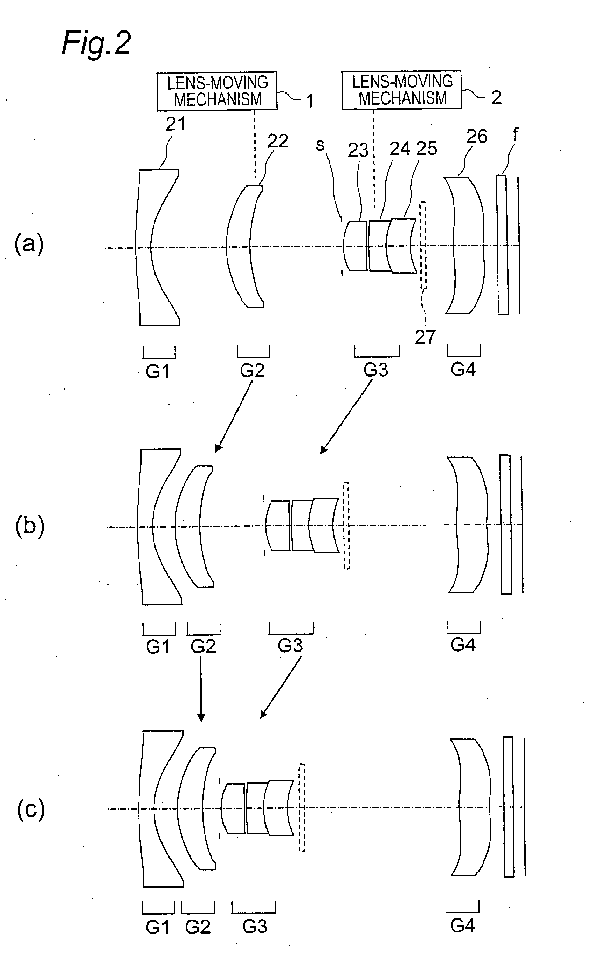

Fig. 2 is a sectional view showing the construction of the zoom lens of the second embodiment of the invention, in which the sectional views of Fig. 2(a), Fig. 2(b) and Fig. 2(c) show zoom positions at the wide angle end state, the intermediate focal distance state and the telephoto end state, respectively. Moreover, the left-hand side of Fig. 2 is the object side, and the right-hand side is the image plane side. The arrows in the figures show the movements of lenses during zooming.

As shown in Fig. 2, the zoom lens of the second embodiment is a zoom lens, which is constructed of a first group lens G1 that has a negative refractive power, a second group lens G2 that has a positive refractive power, a third group lens G3 that has a positive refractive power, and a fourth group lens G4 that has a negative refractive power, and in which the first group lens G1, the second group lens G2, the third group lens G3 and the fourth group lens G4 are arranged in order from the object side toward the image plane side. In the zoom lens, the first group lens G1 and the fourth group lens G4 are fixed during a magnification change and focusing (focus adjusting). Moreover, during the magnification change, the second group lens G2 and the third group lens G3 are moved along the optical axis by lens-moving mechanisms 1, 2 so that a spacing between the first group lens G1 and the second group lens G2 at the telephoto end state is made smaller than a spacing between the first group lens G1 and the second group lens G2 at the wide angle end state, and a spacing between the third group lens G3 and the fourth group lens G4 increases as the zoom lens shifts from the wide angle end state to the telephoto end state.

The first group lens G1 is a meniscus lens 21 of which the convex surface faces the object side, and the second group lens G2 is a lens 22 which has a positive refractive power and of which the convex surface faces the object side and the concave surface faces the image plane side. Moreover, the third group lens G3 has an aperture stop s, a lens 23 that has a positive refractive power on the object side and lenses 24, 25 that have a negative refractive power and are made of different kinds of glass materials. The aperture stop s, the lens 23, the lens 24 and the lens 25 are arranged in order from the object side toward the image plane side. Moreover, the fourth group lens G4 is a lens 15, of which the surface on the extreme object side is an aspheric surface, the refractive power on the optical axis is negative, and the refractive power of the peripheral portion within the effective range of the fourth group lens G4 is positive. Moreover, a glass block f of a filter or the like is placed on the image plane side of the fourth group lens G4. Further, an electronic imaging device 18 such as a CCD or CMOS sensor, of which the light-receiving surface serves as the image plane, is placed on the side opposite from the fourth group lens G4 with respect to the glass block f.

Moreover, the aperture stop s and the lenses 23, 24, 25 of the third group lens G3 are integrally moved in the optical axis direction by the lens-moving mechanism 2 during zooming.

In the construction of the above zoom lens, by fixing the first group lens G1 and the fourth group lens G4, the airtightness of the zoom lens can easily be improved, providing excellent dust-proofness and allowing sufficient robustness to be obtained.

Moreover, by constituting the third group lens G3 that has the aperture stop s of the lens 23 that has the positive refractive power and the lenses 24, 25 that have the negative refractive power, which are made of different materials, an increase in the total length of the zoom lens can be suppressed to a minimum with the chroma aberration corrected. Although one lens that has the positive refractive power and two lenses that have the negative refractive power are employed, it is acceptable to employ two or more lenses that have a positive refractive power or to employ one or three or more lenses that have a negative refractive power.

Moreover, by arranging the aperture stop s, the lens 23 that has the positive refractive power and the lenses 24, 25 that have the negative refractive power in order from the object side toward the image plane side in the third group lens G3, the effective diameters of the lens 23 and the lenses 24, 25 can be made almost the same as the effective diameter of the aperture stop s. By reducing the effective diameter of the aperture stop s, the effective diameter of the lenses of the third group lens G3 can be reduced. In this case, if the composite refractive power of the lens 24 and the lens 25 is negative, the refractive power of the lens 24 may be positive.

Moreover, in the zoom lens of the above construction, the spacing between the third group lens G3 and the fourth group lens G4 is not smaller than 2 mm, which is comparatively large at the shortest, and it is possible to provide a mechanical shutter 27 in the space. In this case, if the shutter is arranged so as to move integrally with the third group lens G3 in the vicinity of the third group lens G3 between the third group lens G3 and the fourth group lens G4, the aperture diameter of the shutter can be reduced since the shutter is located near the aperture stop s, and this is advantageous for compactification. Moreover, since the shutter can be released in a position where luminous fluxes gather in comparison with the case where the shutter is provided in the vicinity of the image plane, a reduction in the peripheral brightness due to shutter speed can be suppressed.

Moreover, by forming the surface located on the extreme object side of the fourth group lens G4 into an aspheric surface such that the refractive power on the optical axis is negative and the refractive power of the peripheral portion within the effective range of the fourth group lens G4 is positive, an incident angle to the image plane of off-axis light beams can be suppressed from excessively increasing with the back focus shortened.

Moreover, by constituting the first group lens G1 of a large effective diameter of one lens, an increase in the total length of the zoom lens due to the lens thickness can be suppressed to a minimum. In this case, by providing the first group lens by a meniscus lens 21 that has a convex surface on the object side, the numerical aperture can be improved, and the peripheral brightness ratio can be kept high even at the wide angle end state. Moreover, by forming the concave surface on the image plane side of the meniscus lens 21 into an aspheric surface, aberration correction of off-axis light beams can be made satisfactory.

Moreover, the radius of curvature of the lens can be increased by using a low-dispersion glass material of a high refractive index for the first group lens G1, and this is therefore advantageous for aberration correction. In addition, the lens thickness is reduced, and this is therefore advantageous also for compactification.

In the second embodiment, the aberration is further suppressed by constituting the third group lens G3 of three lenses. Since the effective diameter of the third group lens G3 is small and the added lens can be of a small effective diameter and a small thickness, its influence on the increase in the total length of the lens can be reduced.

Next, numerical examples of the zoom lens of the second embodiment are shown in Table 4 through Table 6. In the numerical examples shown in the surface data of Table 4, the radius of curvature [mm] of each surface, axial intersurface spacing (lens thickness or air spacing) [mm], refractive index to d line, Abbe number to d line are shown in order from the object side. Moreover, the aspheric surfaces in Table 4 and Table 5 have aspheric surface shapes expressed by the above Equation (1).

Table 4

| Surface | | Radius of curvature | Axial intersurface spacing | Refractive index | Abbe number |
|---|---|---|---|---|---|
| 1 | Aspheric surface | 18.631 | 0.800 | 1.806 | 40.7 |
| 2 | Aspheric surface | 3.967 | Variable | | |
| 3 | Aspheric surface | 4.777 | 1.262 | 1.821 | 24.1 |
| 4 | Aspheric surface | 7.489 | Variable | | |
| 5 | Stop | ∞ | 0.100 | | |
| 6 | Aspheric surface | 2.912 | 1.225 | 1.589 | 61.3 |
| 7 | Aspheric surface | -14.569 | 0.100 | | |
| 8 | | 15.102 | 0.900 | 1.847 | 23.8 |
| 9 | | 3.391 | 1.255 | 1.603 | 60.7 |
| 10 | | 3.402 | Variable | | |
| 11 | Aspheric surface | 7.623 | 1.558 | 1.821 | 24.1 |
| 12 | Aspheric surface | 6.794 | 0.735 | | |
| 13 | | ∞ | 0.500 | 1.517 | 64.2 |
| 14 | | ∞ | | | |

Next, aspheric surface data of the second embodiment are shown in Table 5.

Table 5

| Surface | R | k | A | B | C | D |
|---|---|---|---|---|---|---|
| 1 | 18.631 | 0.0000 | -7.2433E-04 | 8.1779E-05 | -8.4323E-06 | 1.9827E-07 |
| 2 | 3.967 | -0.8013 | -1.6754E-03 | 3.2886E-04 | -4.7666E-05 | 1.6093E-06 |
| 3 | 4.777 | -0.4961 | -1.7160E-03 | -1.2589E-05 | 8.9646E-06 | 9.0630E-07 |
| 4 | 7.489 | 0.9985 | -1.8366E-03 | -3.7443E-05 | 3.1057E-05 | 1.2966E-06 |
| 6 | 2.912 | -0.3823 | 4.6291E-03 | 2.4057E-03 | -1.5051E-04 | 2.7250E-04 |
| 7 | -14.569 | -0.3742 | 1.1994E-02 | 5.0631E-03 | -1.5649E-03 | 1.0785E-03 |
| 11 | 7.623 | -0.9142 | -1.9297E-02 | 2.4861E-03 | -1.9374E-04 | 5.3827E-06 |
| 12 | 6.794 | -1.0000 | -3.3159E-02 | 4.1009E-03 | -2.5990E-04 | 6.1704E-06 |

Next, zoom data of the second embodiment are shown in Table 6. In Table 6, "intersurface spacing 2" means a distance [mm] between the second surface and the third surface, "intersurface spacing 4" means a distance [mm] between the fourth surface and the fifth surface, and "intersurface spacing 10" means a distance [mm] between the tenth surface and the eleventh surface.

Table 6

| | Wide angle end state | Intermediate focal distance state | Telephoto end state |
|---|---|---|---|
| Angle of view | 36.0° | 20.0° | 14.3° |
| Focal distance | 4.9 | 9.8 | 14.0 |
| Intersurface spacing 2 | 3.927 | 1.171 | 1.208 |
| Intersurface spacing 4 | 4.771 | 3.362 | 0.850 |
| Intersurface spacing 10 | 2.256 | 6.421 | 8.896 |

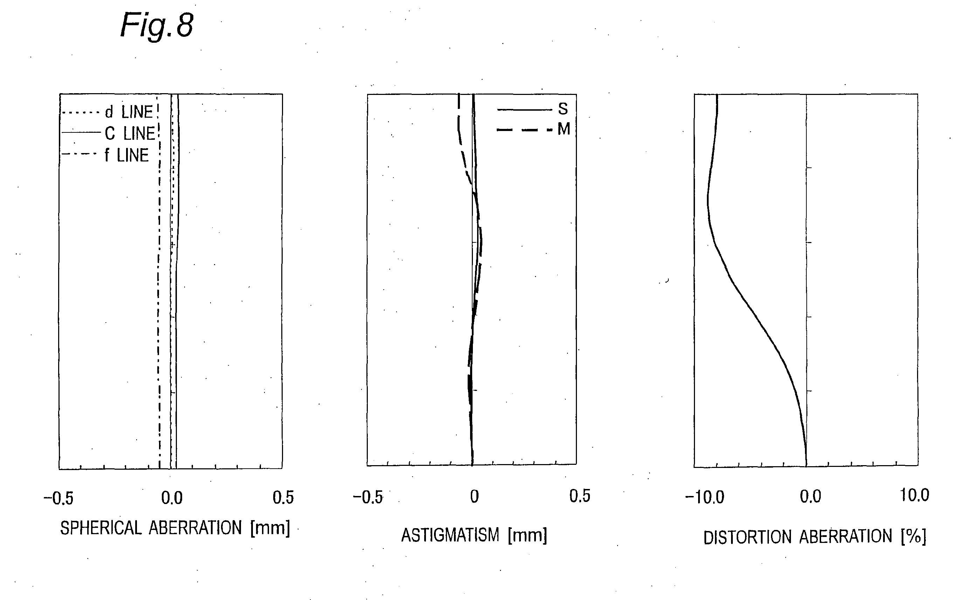

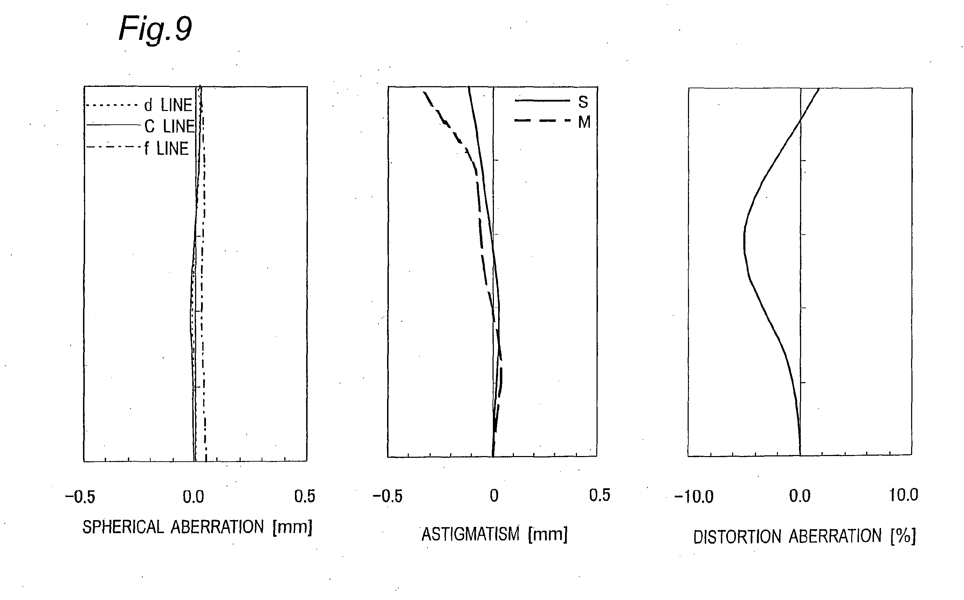

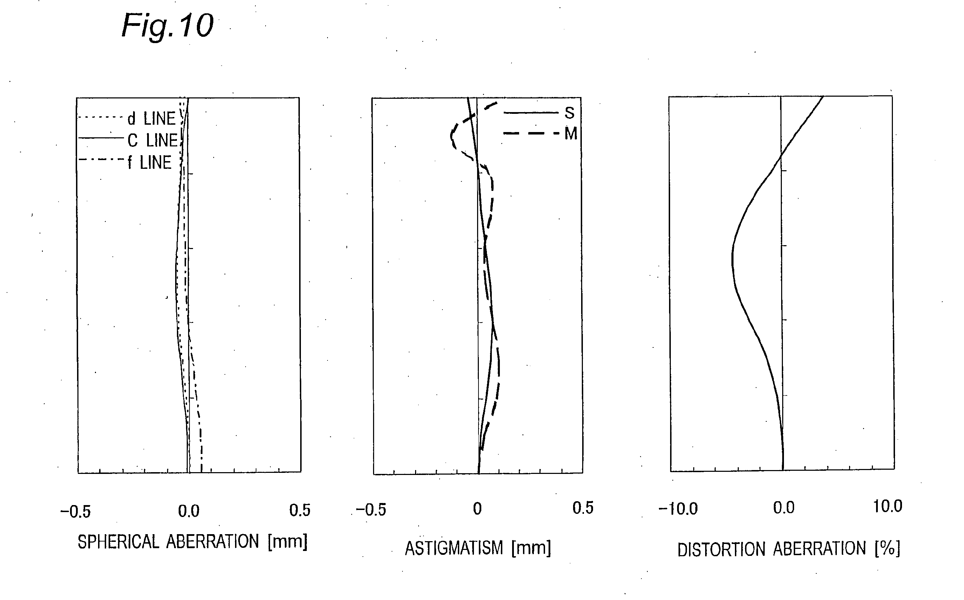

Fig. 8 through Fig. 10 are charts of infinite aberration corresponding to the second embodiment. Fig. 8, Fig. 9 and Fig. 10 show charts of infinite aberration at the wide angle end state, the intermediate focal distance state and the telephoto end state, respectively, and spherical aberration, astigmatism and distortion aberration are shown in order from the left-hand side.

In the spherical aberration charts shown in Fig. 8 through Fig. 10, the dotted line indicates d line (wavelength: 587.6 nm), the solid line indicates C line (wavelength: 656.3 nm), and the one-dot chain line indicates f line (wavelength: 486.1 nm). Moreover, in the astigmatism charts shown in Fig. 8 through Fig. 10, the solid line S indicates the sagittal image plane, and the dashed line M indicates the tangential image plane.

In the zoom lens of the second embodiment, as shown in Fig. 8 through Fig. 10, satisfactory optical characteristics were obtained at the wide angle end state, the intermediate focal distance state and the telephoto end state with regard to the characteristics of spherical aberration, astigmatism and distortion aberration.

Therefore, according to the zoom lens of the second embodiment, a compact high-performance zoom lens of a large zoom ratio can be made up of a simple construction with dust-proofness and robustness, and a small-size thin type zoom lens suitable for portable information equipment such as a digital camera, a portable telephone, PDA or the like can be provided.

(Third Embodiment)

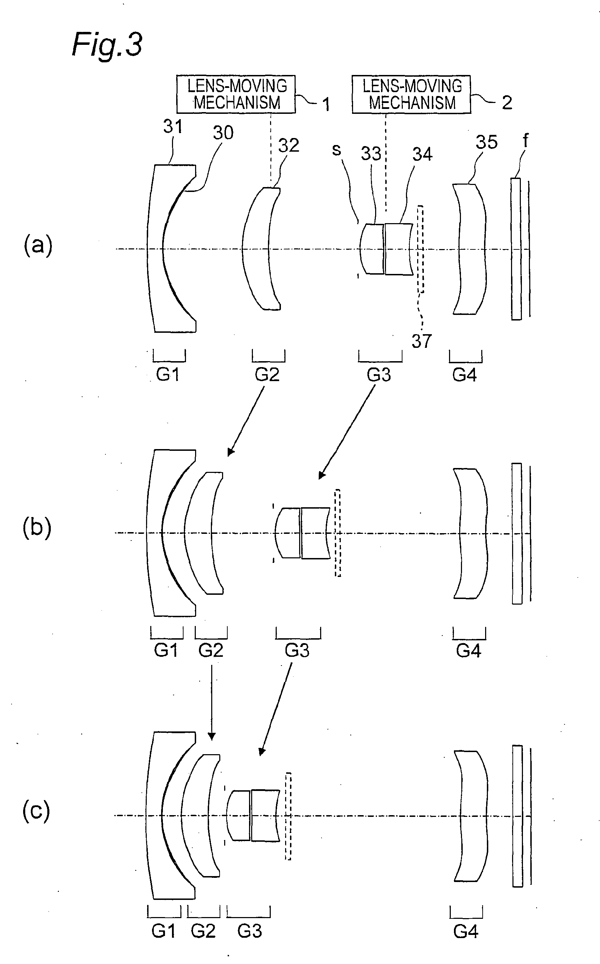

Fig. 3 is a sectional view showing the construction of the zoom lens of the third embodiment of the invention, in which the sectional views of Fig. 3(a), Fig. 3(b) and Fig. 3(c) show zoom positions at the wide angle end state, the intermediate focal distance state and the telephoto end state, respectively. Moreover, the left-hand side of Fig. 3 is the object side, and the right-hand side is the image plane side. The arrows in the figures show the movements of lenses during zooming.

As shown in Fig. 3, the zoom lens of the third embodiment is a zoom lens, which is constructed of a first group lens G1 that has a negative refractive power, a second group lens G2 that has a positive refractive power, a third group lens G3 that has a positive refractive power, and a fourth group lens G4 that has a negative refractive power, and in which the first group lens G1, the second group lens G2, the third group lens G3 and the fourth group lens G4 are arranged in order from the object side toward the image plane side. In the zoom lens, the first group lens G1 and the fourth group lens G4 are fixed during a magnification change and focusing (focus adjusting). Moreover, during the magnification change, the second group lens G2 and the third group lens G3 are moved along the optical axis by lens-moving mechanisms 1, 2 so that a spacing between the first group lens G1 and the second group lens G2 at the telephoto end state is made smaller than a spacing between the first group lens G1 and the second group lens G2 at the wide angle end state, and a spacing between the third group lens G3 and the fourth group lens G4 increases as the zoom lens shifts from the wide angle end state to the telephoto end state.

The first group lens G1 is a meniscus lens 31 of which the convex surface faces the object side, and the second group lens G2 is a lens 32 which has a positive refractive power and of which the convex surface faces the object side and the concave surface faces the image plane side. Moreover, the third group lens G3 has an aperture stop s, a lens 33 that has a positive refractive power on the object side and a lens 34 that has a negative refractive power on the image plane side. The aperture stop s, the lens 33 and the lens 34 are arranged in order from the object side toward the image plane side. Moreover, the fourth group lens G4 is a lens 35 of which the surface on the extreme object side is an aspheric surface, the refractive power on the optical axis is negative, and the refractive power of the peripheral portion within the effective range of the fourth group lens G4 is positive. Moreover, a glass block f of a filter or the like is placed on the image plane side of the fourth group lens G4.

Moreover, the aperture stop s and the lenses 33, 34 of the third group lens G3 are integrally moved in the optical axis direction by the lens-moving mechanism 2 during zooming.

In the construction of the above zoom lens, by fixing the first group lens G1 and the fourth group lens G4, the airtightness of the zoom lens can easily be improved, providing excellent dust-proofness and allowing sufficient robustness to be obtained.

Moreover, by constituting the third group lens G3 that has the aperture stop s of the lens 34 that has the positive refractive power and the lens 34 that has the negative refractive power, which are made of different materials, an increase in the total length of the zoom lens can be suppressed to a minimum with the chroma aberration corrected. Although one lens that has the positive refractive power and one lens that has the negative refractive power are employed, it is acceptable to constitute the third group lens G3 of two or more of either one or to constitute the third group lens G3 of two or more of both of them.

Moreover, by arranging the aperture stop s, the lens 33 that has the positive refractive power and the lens 34 that has the negative refractive power in order from the object side toward the image plane side in the third group lens G3, the effective diameters of the lens 33 and the lens 34 can be made almost the same as the effective diameter of the aperture stop s.

Moreover, in the zoom lens of the above construction, the spacing between the third group lens G3 and the fourth group lens G4 is not smaller than 2 mm, which is comparatively large at the shortest, and it is possible to provide a mechanical shutter 36 in the space. In this case, if the shutter is arranged so as to move integrally with the third group lens G3 in the vicinity of the third group lens G3 between the third group lens G3 and the fourth group lens G4, the aperture diameter of the shutter can be reduced since the shutter is located near the aperture stop s, and this is advantageous for compactification. Moreover, since the shutter can be released in a position where luminous fluxes gather in comparison with the case where the shutter is provided in the vicinity of the image plane, a reduction in the peripheral brightness due to shutter speed can be suppressed.

Moreover, by forming the surface located on the extreme object side of the fourth group lens G4 into an aspheric surface such that the refractive power on the optical axis is negative and the refractive power of the peripheral portion within the effective range of the fourth group lens G4 is positive, an incident angle to the image plane of off-axis light beams can be suppressed from excessively increasing with the back focus shortened.

Moreover, by constituting the first group lens G1 of a large effective diameter of one lens, an increase in the total length of the zoom lens due to the lens thickness can be suppressed to a minimum. In this case, by providing the first group lens by a meniscus lens 31 that has a convex surface on the object side, the numerical aperture can be improved, and the peripheral brightness ratio can be kept high even at the wide angle end state. Moreover, by forming the concave surface on the image plane side of the meniscus lens 31 into an aspheric surface, aberration correction of the off-axis light beams can be made satisfactory.

Moreover, the radius of curvature of the lens can be increased by using a low-dispersion glass material of a high refractive index for the first group lens G1, and this is therefore advantageous for aberration correction. In addition, the lens thickness is reduced, and this is therefore advantageous also for compactification.

In the third embodiment, the characteristics are improved by using a material of a refractive index of not smaller than 1.85, which is not used for the glass material for molding, for the first group lens G1 and further forming the surface shape into an aspheric surface with a resin layer 30 on the surface located on the image plane side. If the resin layer 30 is formed on the object side of the first lens group G1, the resin surface, which easily suffers scratches or the like, is disadvantageously exposed outside the zoom lens, and this is unfavorable.

Next, numerical examples of the zoom lens of the third embodiment are shown in Table 7 through Table 9. In the numerical examples shown in the surface data of Table 7, the radius of curvature [mm] of each surface, axial intersurface spacing (lens thickness or air spacing) [mm], refractive index to d line, Abbe number to d line are shown in order from the object side. Moreover, the aspheric surfaces in Table 7 and Table 8 have aspheric surface shapes expressed by the above Equation (1).

Table 7

| Surface | | Radius of curvature | Axial intersurface spacing | Refractive index | Abbe number |
|---|---|---|---|---|---|
| 1 | | 23.636 | 0.800 | 1.883 | 40.8 |
| 2 | | 5.038 | 0.020 | 1.530 | 45.0 |
| 3 | Aspheric surface | 4.118 | Variable | | |
| 4 | Aspheric surface | 4.894 | 1.396 | 1.821 | 24.1 |
| 5 | Aspheric surface | 8.702 | Variable | | |
| 6 | Stop | ∞ | 0.100 | | |
| 7 | Aspheric surface | 2.710 | 1.250 | 1.589 | 61.3 |
| 8 | Aspheric surface | -12.559 | 0.100 | | |
| 9 | | 1530.219 | 1.269 | 1.847 | 23.8 |
| 10 | | 4.295 | Variable | | |
| 11 | Aspheric surface | 7.685 | 1.325 | 1.821 | 24.1 |
| 12 | Aspheric surface | 6.957 | 1.332 | | |
| 13 | | ∞ | 0.500 | 1.517 | 64.2 |
| 14 | | ∞ | | | |

Next, aspheric surface data of the third embodiment are shown in Table 8.

Table 8

| Surface | R | K | A | B | C | D |
|---|---|---|---|---|---|---|
| 3 | 4.118 | -0.9244 | -1.1843E-03 | 1.1385E-04 | -1.1690E-05 | 5.0466E-07 |
| 4 | 4.894 | -0.6773 | -1.3239E-03 | 6.1763E-05 | -6.0636E-06 | 1.7957E-06 |
| 5 | 8.702 | -0.6302 | -1.2106E-03 | 1.3945E-04 | -1.2468E-05 | 4.2440E-06 |
| 7 | 2.710 | -0.1913 | 5.5797E-03 | 3.3774E-03 | -4.6941E-04 | 5.1610E-04 |
| 8 | -12.559 | -0.1859 | 1.6090E-02 | 9.0819E-03 | -4.4476E-03 | 2.7554E-03 |
| 11 | 7.685 | -1.0000 | -1.7021E-02 | 2.1139E-03 | -2.1493E-04 | 8.6137E-06 |
| 12 | 6.957 | -1.0000 | -2.3042E-02 | 2.5008E-03 | -1.7995E-04 | 5.4909E-06 |

Next, zoom data of the third embodiment are shown in Table 9. In Table 9, "intersurface spacing 3" means a distance [mm] between the third surface and the fourth surface, "intersurface spacing 5" means a distance [mm] between the fifth surface and the sixth surface, and "intersurface spacing 10" means a distance [mm] between the tenth surface and the eleventh surface.

Table 9

| | Wide angle end state | Intermediate focal distance state | Telephoto end state |
|---|---|---|---|
| Angle of view | 36.0° | 20.0° | 14.3° |

(continued)

|  | Wide angle end state | Intermediate focal distance state | Telephoto end state |
| --- | --- | --- | --- |
| Focal distance | 4.90 | 9.80 | 13.96 |
| Intersurface spacing 3 | 4.190 | 1.154 | 0.993 |
| Intersurface spacing 5 | 4.672 | 3.297 | 0.850 |
| Intersurface spacing 10 | 2.616 | 7.027 | 9.635 |

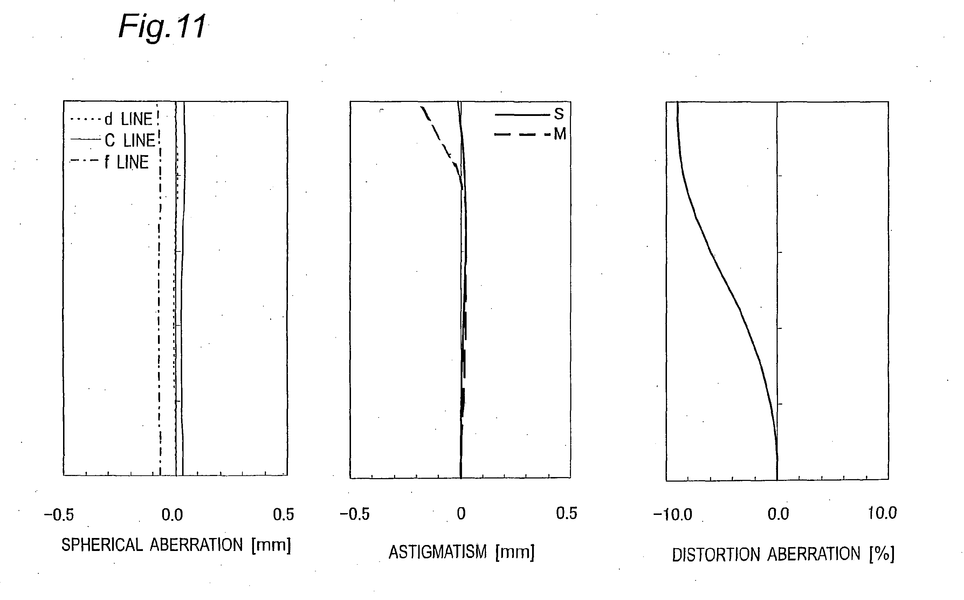

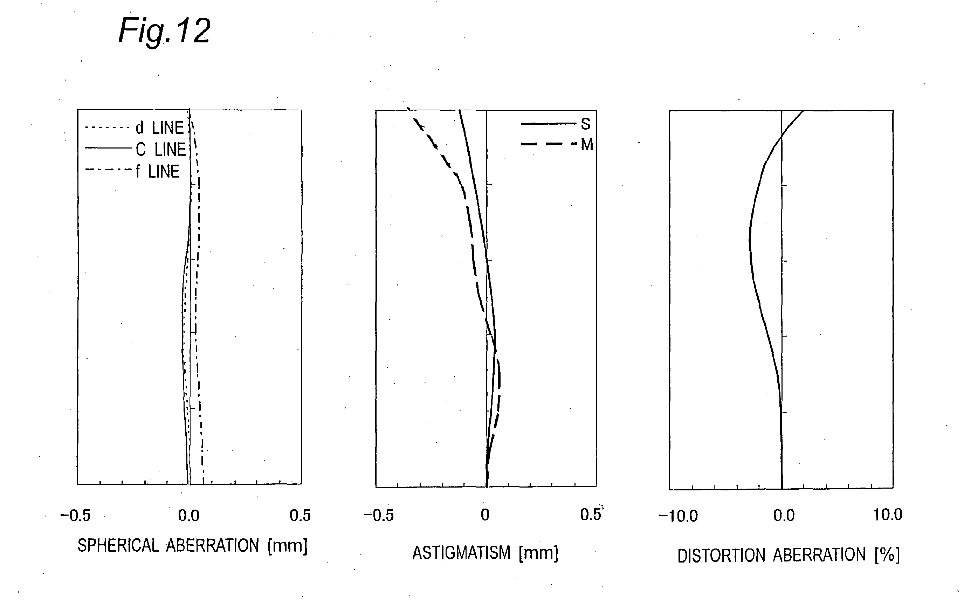

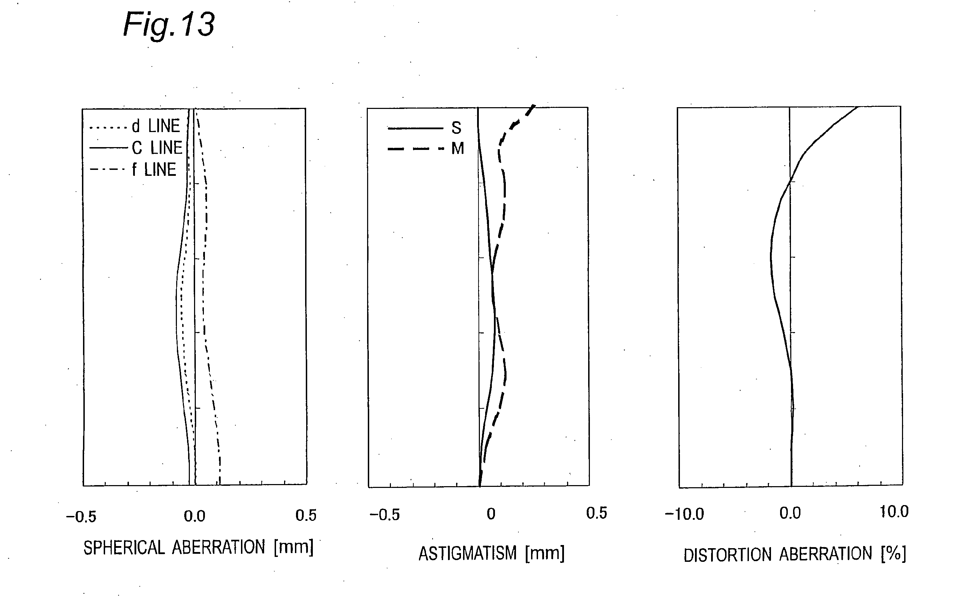

Fig. 11 through Fig. 13 are charts of infinite aberration corresponding to the third embodiment. Fig. 11, Fig. 12 and Fig. 13 show charts of infinite aberration at the wide angle end state, the intermediate focal distance state and the telephoto end state, respectively, and spherical aberration, astigmatism and distortion aberration are shown in order from the left-hand side.

In the spherical aberration charts shown in Fig. 11 through Fig. 13, the dotted line indicates d line (wavelength: 587.6 nm), the solid line indicates C line (wavelength: 656.3 nm), and the one-dot chain line indicates f line (wavelength: 486.1 nm). Moreover, in the astigmatism charts shown in Fig. 11 through Fig. 13, the solid line S indicates the sagittal image plane, and the dashed line M indicates the tangential image plane.

In the zoom lens of the third embodiment, as shown in Fig. 11 through Fig. 13, satisfactory optical characteristics were obtained at the wide angle end state, the intermediate focal distance state and the telephoto end state with regard to the characteristics of spherical aberration, astigmatism and distortion aberration.

Therefore, according to the zoom lens of the third embodiment, a compact high-performance zoom lens of a large zoom ratio can be made up of a simple construction with dust-proofness and robustness, and a small-size thin type zoom lens suitable for portable information equipment such as a digital camera, a portable telephone, PDA or the like can be provided.

(Fourth Embodiment)

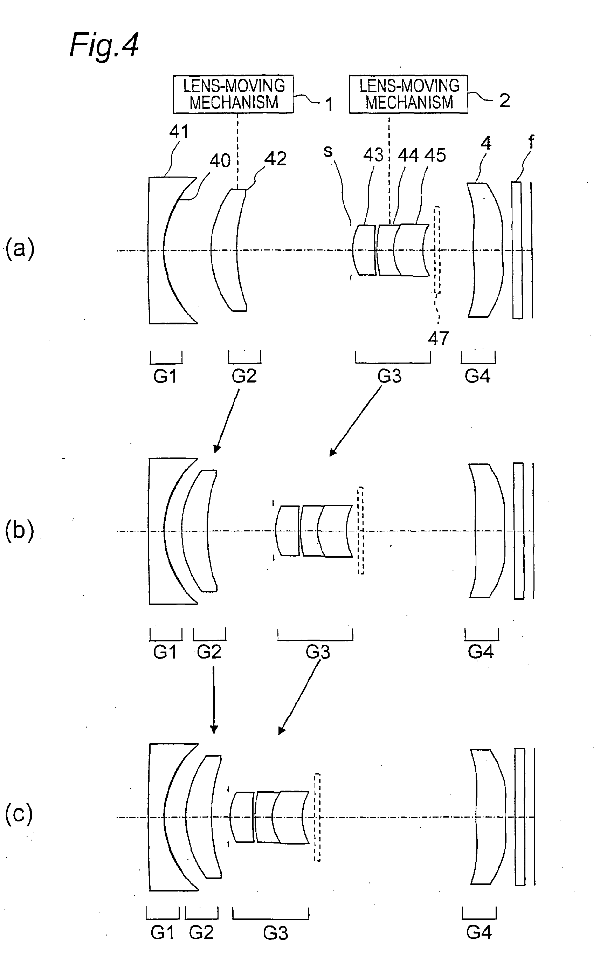

Fig. 4 is a sectional view showing the construction of the zoom lens of the fourth embodiment of the invention, in which the sectional views of Fig. 4(a), Fig. 4(b) and Fig. 4(c) show zoom positions at the wide angle end state, the intermediate focal distance state and the telephoto end state, respectively. Moreover, the left-hand side of Fig. 4 is the object side, and the right-hand side is the image plane side. The arrows in the figures show the movements of lenses during zooming.

As shown in Fig. 4, the zoom lens of the fourth embodiment is a zoom lens, which is constructed of a first group lens G1 that has a negative refractive power, a second group lens G2 that has a positive refractive power, a third group lens G3 that has a positive refractive power, and a fourth group lens G4 that has a negative refractive power, and in which the first group lens G1, the second group lens G2, the third group lens G3 and the fourth group lens G4 are arranged in order from the object side toward the image plane side. In the zoom lens, the first group lens G1 and the fourth group lens G4 are fixed during a magnification change and focusing (focus adjusting). Moreover, during the magnification change, the second group lens G2 and the third group lens G3 are moved along the optical axis by lens-moving mechanisms 1, 2 so that a spacing between the first group lens G1 and the second group lens G2 at the telephoto end state is made smaller than a spacing between the first group lens G1 and the second group lens G2 at the wide angle end state, and a spacing between the third group lens G3 and the fourth group lens G4 increases as the zoom lens shifts from the wide angle end state to the telephoto end state.

The first group lens G1 is a meniscus lens 41 of which the convex surface faces the object side, and the second group lens G2 is a lens 42 which has a positive refractive power and of which the convex surface faces the object side and the concave surface faces the image plane side. Moreover, the third group lens G3 has an aperture stop s, a lens 43 that has a positive refractive power on the object side and lenses 44, 45 that have a negative refractive power on the image plane side. The aperture stop s and the lenses 43, 44, 45 are arranged in order from the object side toward the image plane side. Moreover, the fourth group lens G4 is a lens 46, of which the surface on the extreme object side is an aspheric surface, the refractive power on the optical axis is negative, and the refractive power of the peripheral portion within the effective range of the fourth group lens G4 is positive. Moreover, a glass block f of a filter or the like is placed on the image plane side of the fourth group lens G4.

Moreover, the aperture stop s and the lenses 43, 44, 45 of the third group lens G3 are integrally moved in the optical axis direction by the lens-moving mechanism 2 during zooming.

In the construction of the above zoom lens, by fixing the first group lens G1 and the fourth group lens G4, the airtightness of the zoom lens can easily be improved, providing excellent dust-proofness and allowing sufficient robustness to be obtained.

Moreover, by constituting the third group lens G3 that has the aperture stop s of the lens 43 that has the positive refractive power and the lenses 44, 45 that have the negative refractive power, which are made of different materials, an increase in the total length of the zoom lens can be suppressed to a minimum with the chroma aberration corrected. Although one lens that has the positive refractive power and two lenses that have the negative refractive power are employed, it is acceptable to employ two or more lenses that have a positive refractive power or to employ one or three or more lenses that have a negative refractive power.

Moreover, by arranging the aperture stop s, the lens 43 that has the positive refractive power and the lenses 44, 45 that have the negative refractive power in order from the object side toward the image plane side in the third group lens G3, the effective diameters of the lens 43 and the lenses 44, 45 can be made almost the same as the effective diameter of the aperture stop s. By reducing the effective diameter of the aperture stop s, the effective diameter of the lenses of the third group lens G3 can be reduced. In this case, if the composite refractive power of the lens 44 and the lens 45 is negative, the refractive power of the lens 44 may be positive.

Moreover, in the zoom lens of the above construction, the spacing between the third group lens G3 and the fourth group lens G4 is not smaller than 2 mm, which is comparatively large at the shortest, and it is possible to provide a mechanical shutter 47 in the space. In this case, if the shutter is arranged so as to move integrally with the third group lens G3 in the vicinity of the third group lens G3 between the third group lens G3 and the fourth group lens G4, the aperture diameter of the shutter can be reduced since the shutter is located near the aperture stop s, and this is advantageous for compactification. Moreover, since the shutter can be released in a position where luminous fluxes gather in comparison with the case where the shutter is provided in the vicinity of the image plane, a reduction in the peripheral brightness due to shutter speed can be suppressed.

Moreover, by forming the surface located on the extreme object side of the fourth group lens G4 into an aspheric surface such that refractive power on the optical axis is negative and the refractive power of the peripheral portion within the effective range of the fourth group lens G4 is positive, an incident angle to the image plane of off-axis light beams can be suppressed from excessively increasing with the back focus shortened.

Moreover, by constituting the first group lens G1 of a large effective diameter of one lens, the increase in the total length of the zoom lens due to the lens thickness can be suppressed to a minimum. In this case, by providing the first group lens by a meniscus lens 41 that has a convex surface on the object side, the numerical aperture can be improved, and the peripheral brightness ratio can be kept high even at the wide angle end state. Moreover, by forming the concave surface on the image plane side of the meniscus lens 41 into an aspheric surface, aberration correction of off-axis light beams can be made satisfactory. Moreover, the radius of curvature of the lens can be increased by using a low-dispersion glass material of a high refractive index for the first group lens G1, and this is therefore advantageous for aberration correction. In addition, the lens thickness is reduced, and this is therefore advantageous also for the compactification.

In the fourth embodiment, the characteristics are improved by using a material of a refractive index of not smaller than 1.85, which is not used for the glass material for molding, for the first group lens G1 and further forming the surface shape into an aspheric surface with a resin layer 40 on the surface located on the image plane side. If the resin layer 40 is formed on the object side of the first group lens G1, the resin surface, which easily suffers scratches or the like, is disadvantageously exposed outside the zoom lens, and this is unfavorable.

Next, numerical examples of the zoom lens of the fourth embodiment are shown in Table 10 through Table 12. In the numerical examples shown in the surface data of Table 10, the radius of curvature [mm] of each surface, axial intersurface spacing (lens thickness or air spacing) [mm], refractive index to d line, Abbe number to d line are shown in order from the object side. Moreover, the aspheric surfaces in Table 10 and Table 11 have aspheric surface shapes expressed by the above Equation (1).

Table 10

| Surface | | Radius of curvature | Axial intersurface spacing | Refractive index | Abbe number |
|---|---|---|---|---|---|
| 1 | | 100.000 | 0.800 | 1.883 | 40.8 |
| 2 | | 4.906 | 0.020 | 1.530 | 45.0 |
| 3 | Aspheric surface | 4.069 | Variable | | |
| 4 | Aspheric surface | 4.937 | 1.356 | 1.821 | 24.1 |
| 5 | Aspheric surface | 9.702 | Variable | | |
| 6 | | ∞ | 0.100 | | |
| 7 | Aspheric surface | 2.905 | 1.179 | 1.589 | 61.3 |

(continued)

| Surface | | Radius of curvature | Axial intersurface spacing | Refractive index | Abbe number |
|---|---|---|---|---|---|
| 8 | Aspheric surface | -178.091 | 0.100 | | |
| 9 | | 5.654 | 0.900 | 1.847 | 23.8 |
| 10 | | 2.300 | 1.528 | 1.543 | 67.7 |
| 11 | | 2.791 | Variable | | |
| 12 | Aspheric surface | 10.180 | 1.435 | 1.821 | 24.1 |
| 13 | Aspheric surface | 9.303 | 0.500 | | |
| 14 | | ∞ | 0.500 | 1.517 | 64.2 |
| 15 | | ∞ | | | |

Next, aspheric surface data of the fourth embodiment are shown in Table 11.

Table 11

| Surface | R | k | A | B | C | D |
|---|---|---|---|---|---|---|
| 3 | 4.069 | -0.9708 | -2.5748E-03 | 4.2717E-04 | -3.9247E-05 | 1.3782E-06 |
| 4 | 4.937 | -0.6708 | -1.4280E-03 | 2.1055E-04 | -9.1947E-06 | 3.3371E-07 |
| 5 | 9.702 | -0.8868 | -3.9861E-04 | 9.7547E-05 | 9.1326E-06 | -5.9315E-07 |
| 7 | 2.905 | -0.3511 | 5.2176E-03 | 1.5851E-03 | 1.2497E-04 | 1.5384E-04 |
| 8 | -178.091 | 1.0000 | 1.1512E-02 | 3.7515E-03 | -7.5332E-04 | 6.9919E-04 |
| 12 | 10.180 | -0.9846 | -1.5810E-02 | 1.8739E-03 | -1.3640E-04 | 4.1345E-06 |
| 13 | 9.303 | 0.9998 | -2.9903E-02 | 3.4339E-03 | -2.0457E-04 | 4.8732E-06 |

Next, zoom data of the fourth embodiment are shown in Table 12. In Table 12, "intersurface spacing 3" means a distance [mm] between the third surface and the fourth surface, "intersurface spacing 5" means a distance [mm] between the fifth surface and the sixth surface, and "intersurface spacing 11" means a distance [mm] between the eleventh surface and the twelfth surface.

Table 12

| | Wide angle end state | Intermediate focal distance state | Telephoto end state |
|---|---|---|---|
| Angle of view | 36.0° | 20.0° | 14.3° |
| Focal distance | 4.9 | 9.8 | 13.965 |
| Intersurface spacing 3 | 2.519 | 0.931 | 1.140 |
| Intersurface spacing 5 | 5.946 | 3.417 | 0.850 |
| Intersurface spacing 11 | 2.618 | 6.735 | 9.093 |

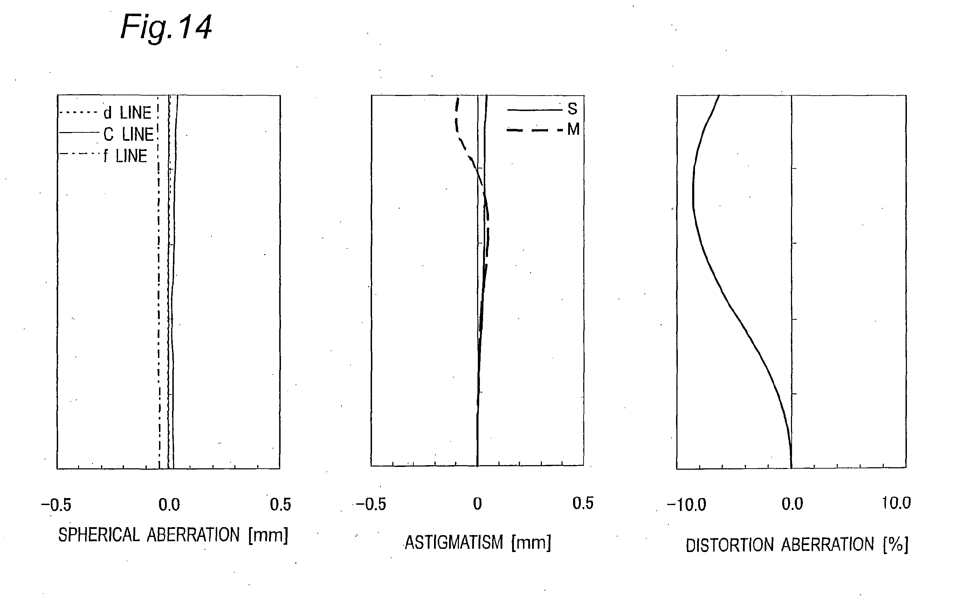

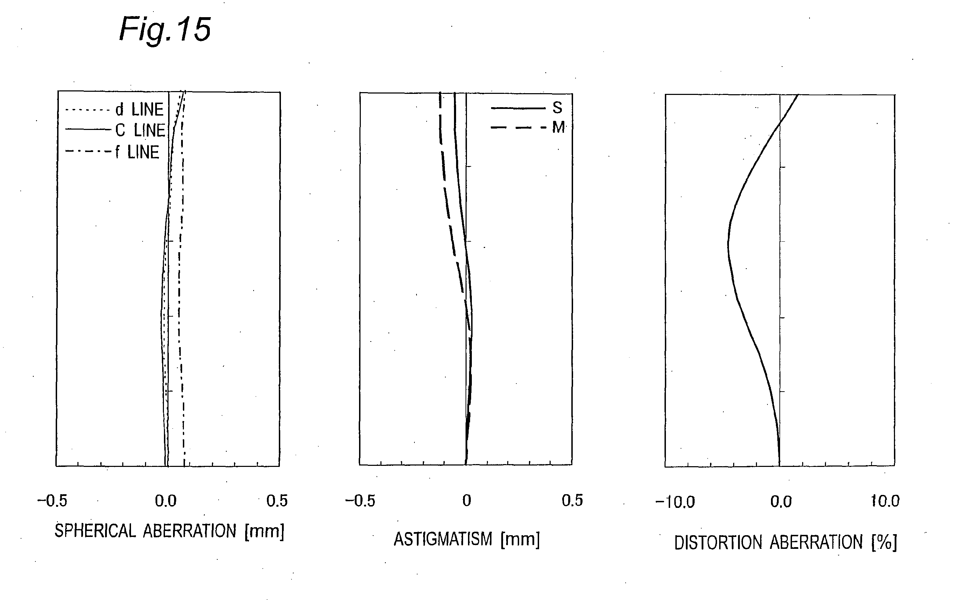

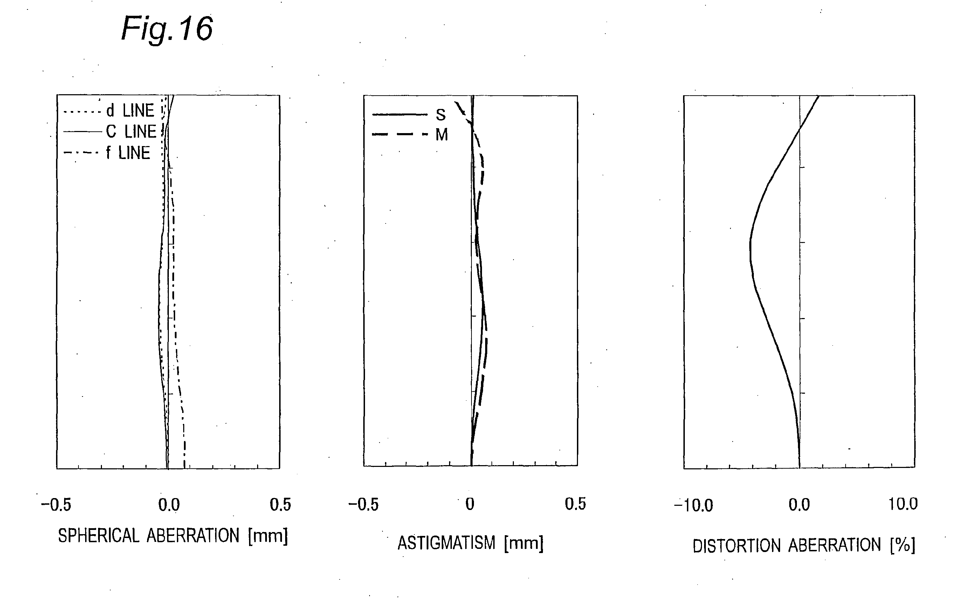

Fig. 14 through Fig. 16 are charts of infinite aberration corresponding to the fourth embodiment. Fig. 14, Fig. 15 and Fig. 16 show charts of infinite aberration at the wide angle end state, the intermediate focal distance state and the telephoto end state, respectively, and spherical aberration, astigmatism and distortion aberration are shown in order from the left-hand side.

In the spherical aberration charts shown in Fig. 14 through Fig. 16, the dotted line indicates d line (wavelength: 587.6 nm), the solid line indicates C line (wavelength: 656.3 nm), and the one-dot chain line indicates f line (wavelength: 486.1 nm). Moreover, in the astigmatism charts shown in Fig. 14 through Fig. 16, the solid line S indicates the sagittal image plane, and the dashed line M indicates the tangential image plane.

In the zoom lens of the fourth embodiment, as shown in Fig. 14 through Fig. 16, satisfactory optical characteristics were obtained at the wide angle end state, the intermediate focal distance state and the telephoto end state with regard to the characteristics of spherical aberration, astigmatism and distortion aberration.

Therefore, according to the zoom lens of the fourth embodiment, a compact high-performance zoom lens of a large zoom ratio can be made up of a simple construction with dust-proofness and robustness, and a small-size thin type zoom lens suitable for portable information equipment such as a digital camera, a portable telephone, PDA or the like can be provided.

In the first through fourth embodiments, the concrete numerical examples are shown in Table 1 through Table 12. However, the zoom lens of the invention is not limited to these embodiments, and it is proper to arbitrarily set the refractive powers and the aberrations of the first group lens through the fourth group lens so that satisfactory optical characteristics (characteristics of spherical aberration, astigmatism, distortion aberration and so on) are obtained at the wide angle end state, the intermediate focal distance state and the telephoto end state.

In the zoom lens of the invention, as shown in the first through fourth embodiments, the total length of the lens is not greater than 20 mm, and it is possible to make the total thickness of the camera module have a very short thickness of not greater than 30 mm by a combination with an electronic imaging device (18 in Fig. 1). Therefore, it is possible to easily mount the zoom lens on portable information equipment such as a digital camera, a portable telephone and PDA (Personal Digital Assistant).

**Claims**

1.  A zoom lens comprising:

    a first group lens that has a negative refractive power and is placed at a fixed distance from an image plane;
    a second group lens that has a positive refractive power and moves during zooming;
    a third group lens that has a positive refractive power and moves during zooming; and
    a fourth group lens which has a negative refractive power and is placed at a fixed distance from the image plane, wherein
    the first group lens, the second group lens, the third group lens and the fourth group lens are arranged in order from an object side toward the image plane, and
    the zoom lens comprises a lens-moving mechanism for moving the second group lens and the third group lens in an optical axis direction so that a spacing between the first group lens and the second group lens at a telephoto end state is made smaller than a spacing between the first group lens and the second group lens at a wide angle end state, and a spacing between the third group lens and the fourth group lens increases as the zoom lens shifts from the wide angle end state to the telephoto end state.

2.  The zoom lens as claimed in Claim 1, wherein
    the third group lens has an aperture stop and a plurality of lenses.

3.  The zoom lens as claimed in Claim 2, wherein
    the plurality of lenses of the third group lens are at least one lens that has a positive refractive power and at least one lens that has a negative refractive power.

4.  The zoom lens as claimed in Claim 2, wherein
    the plurality of lenses of the third group lens are a lens that has a positive refractive power and a lens that has a negative refractive power, and
    the aperture stop, the lens that has the positive refractive power and the lens that has the negative refractive power are arranged in order from the object side toward the image plane side.

5.  The zoom lens as claimed in Claim 1, further comprising:

    a mechanical shutter that is placed in between the third group lens and the fourth group lens and in the vicinity of the third group lens.

6.  The zoom lens as claimed in Claim 1, wherein
    a surface located on the extreme object side of the fourth group lens is an aspheric surface, and
    the refractive power on the optical axis of the fourth group lens is negative, and the refractive power of a peripheral portion within an effective range of the fourth group lens is positive.

7.  The zoom lens as claimed in Claim 1, wherein

the first group lens is comprised of only one lens.

8. The zoom lens as claimed in Claim 7, wherein
the one lens of the first group lens is a meniscus lens that has a convex surface on the object side.

9. The zoom lens as claimed in Claim 8, wherein
a concave surface located on the image plane side of the meniscus lens is an aspheric surface.

10. The zoom lens as claimed in Claim 9, wherein
a surface shape of the concave surface located on the image plane side of the meniscus lens is formed into an aspheric surface with resin.

11. A digital camera comprising:

the zoom lens claimed in claim 1; and
an electronic imaging device that receives an image formed by the zoom lens.

12. Portable information equipment comprising:

the zoom lens claimed in claim 1; and
an electronic imaging device that receives an image formed by the zoom lens.

*Fig.1*

*Fig.2*

| LENS-MOVING MECHANISM | ~ 1 |
| LENS-MOVING MECHANISM | ~ 2 |

21    22    s    23  24 25    26    f

(a)

L_ G1 _|    L_ G2 _|    L____ G3 ____|    L_ G4 _|

27

(b)

L_ G1 _|L_ G2 _|    L____ G3 ____|    L_ G4 _|

(c)

L_ G1 _|L_ G2 _|    L____ G3 ____|    L_ G4 _|

# Fig.3

(a)

LENS-MOVING MECHANISM ～ 1

LENS-MOVING MECHANISM ～ 2

31 30 32 s 33 34 35 f

37

G1 G2 G3 G4

(b)

G1 G2 G3 G4

(c)

G1 G2 G3 G4

## Fig.4

## Fig.5

SPHERICAL ABERRATION [mm]

ASTIGMATISM [mm]

DISTORTION ABERRATION [%]

EP 2 048 530 A1

Fig.6

## Fig.7

d LINE
C LINE
f LINE

-0.5    0.0    0.5
SPHERICAL ABERRATION [mm]

S
M

-0.5    0    0.5
ASTIGMATISM [mm]

-10.0    0.0    10.0
DISTORTION ABERRATION [%]

## Fig.8

-0.5　　　　0.0　　　　0.5

SPHERICAL ABERRATION [mm]

········· d LINE
———— C LINE
—··—··— f LINE

-0.5　　　　0　　　　0.5

ASTIGMATISM [mm]

———— S
— — — M

-10.0　　　　0.0　　　　10.0

DISTORTION ABERRATION [%]

## Fig.9

SPHERICAL ABERRATION [mm]

ASTIGMATISM [mm]

DISTORTION ABERRATION [%]

-0.5    0.0    0.5

-0.5    0    0.5

-10.0    0.0    10.0

d LINE
C LINE
f LINE

S
M

## Fig.10

SPHERICAL ABERRATION [mm]

-0.5    0.0    0.5

d LINE
C LINE
f LINE

ASTIGMATISM [mm]

-0.5    0    0.5

S
M

DISTORTION ABERRATION [%]

-10.0    0.0    10.0

## Fig.11

SPHERICAL ABERRATION [mm]

ASTIGMATISM [mm]

DISTORTION ABERRATION [%]

-0.5     0.0     0.5

-0.5     0     0.5

-10.0     0.0     10.0

·····d LINE
——C LINE
—·— f LINE

—— S
— — — M

Fig.12

SPHERICAL ABERRATION [mm]

ASTIGMATISM [mm]

DISTORTION ABERRATION [%]

-0.5          0.0          0.5

-0.5          0          0.5

-10.0          0.0          10.0

d LINE
C LINE
f LINE

S
M

EP 2 048 530 A1

## Fig.13

| d LINE |
| C LINE |
| f LINE |

SPHERICAL ABERRATION [mm]

-0.5    0.0    0.5

| S |
| M |

ASTIGMATISM [mm]

-0.5    0    0.5

DISTORTION ABERRATION [%]

-10.0    0.0    10.0

Fig.14

Fig.15

## Fig.16

SPHERICAL ABERRATION [mm]

d LINE
C LINE
f LINE

-0.5    0.0    0.5

ASTIGMATISM [mm]

S
M

-0.5    0    0.5

DISTORTION ABERRATION [%]

-10.0    0.0    10.0

## INTERNATIONAL SEARCH REPORT

International application No.

PCT/JP2007/055658

| A. CLASSIFICATION OF SUBJECT MATTER |
| --- |
| *G02B15/167*(2006.01)i, *G02B13/18*(2006.01)i |

According to International Patent Classification (IPC) or to both national classification and IPC

| B. FIELDS SEARCHED |
| --- |
| Minimum documentation searched (classification system followed by classification symbols)<br>G02B15/167, G02B13/18 |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 8-248312 A (Nikon Corp.),<br>27 September, 1996 (27.09.96),<br>Example 6; Fig. 26<br>& US 005721642 A    & US 005798871 A<br>& US 005668668 A | 1-3<br>4-6,11,12 |
| X<br>Y | JP 2003-295058 A (Pentax Corp.),<br>15 October, 2003 (15.10.03),<br>Example 1 to 4; Figs. 1 to 17<br>& US 2003/0189768 A1   & DE 010315487 A1 | 1,7<br>4-6,8-12 |
| X<br>Y | JP 2004-138884 A (Pentax Corp.),<br>13 May, 2004 (13.05.04),<br>Example 1; Fig. 4<br>(Family: none) | 1,7<br>5,6,8-12 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>   25 April, 2007 (25.04.07) | Date of mailing of the international search report<br>   15 May, 2007 (15.05.07) |
| --- | --- |
| Name and mailing address of the ISA/<br>   Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2007/055658

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-53633 A (Olympus Corp.), 19 February, 2004 (19.02.04), Claims 5, 6, 7; Par. Nos. [0004], [0074] to [0076]; examples 1 to 12; Figs. 1 to 12 & US 2004/0080655 A1 | 5 |
| Y | JP 2004-326097 A (Olympus Corp.), 18 November, 2004 (18.11.04), Par. Nos. [0016] to [0018]; examples 1 to 4; Figs. 1, 3, 5, 7 & US 2004/0246598 A1    & US 2005/0122358 A1 | 6 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11249016 A
- JP 2003043358 A
- JP 2004318106 A